# EUROPEAN PATENT SPECIFICATION

(11) **EP 2 108 549 B1**
(45) Date of publication and mention of the grant of the patent: **13.04.2011**
(21) Application number: 09380061.3
(22) Date of filing: 26.03.2009
(51) Int. Cl.: B60R 21/34

(54) **Hinge for automobile hoods**
Scharnier für Automobilmotorhauben
Charnière pour capots d'automobile

(30) Priority: 07.04.2008 ES 200800697 U
(43) Date of publication of application: 14.10.2009
(73) Proprietor: Seat, S.A., 08760 Martorell (ES)
(72) Inventor: Segura Santillana, Angel C/o Seat, S.A., 08760 - Martorell - Barcelona (ES); Roig Guardiola, Anna C/o Seat, S.A., 08760 - Martorell - Barcelona (ES); Roman Marin, Joaquin , C/o Seat, S.A., 08760 - Martorell - Barcelona (ES)
(74) Representative: Carvajal y Urquijo, Isabel

(56) References cited:
- EP-A1- 1 604 874
- US-A1- 2006 175 844
- US-B2- 6 860 356

## Description

### FIELD OF THE INVENTION

The present invention refers to a hinge for automobile hoods, and more specifically to an active hinge, through which it is possible to increase pedestrians' safety, in case of accident, since it reduces the effect of a possible impact against the automobile hood.

### BACKGROUND OF THE INVENTION

Generally, between the hood coating and the rigid elements hidden under said hood there exists very little space, especially in sport cars with a very low hood profile. This causes that, in case of an accident in which a pedestrian impacts against the hood, there can be a deformation of the hood reaching the rigid elements under said hood, thus the effects of the accident will be the result of an impact against a rigid element and not on an element with plastic deformation.

In order to avoid the problem described, it is well-known to have damping means under the hood, in an attempt to reduce the effect of the impact. However, since there is a minimum separation or space between the hood and the rigid elements of the hood, there is a strong possibility of the hood deformation reaching said rigid elements and thus causing serious injuries.

Besides, document US 2006/0175844 discloses a vehicle hood assembly to raise the rearward and frontward portions of a vehicle hood by means of an actuator extendable to raise the rearward portion of the hood from a first position to a higher second position, and a striker which enables the frontward position to rise as the rearward portion rises when said striker is engaged with a latch member.

### DESCRIPTION OF THE INVENTION

The object of the present invention is to eliminate the possibility that, as a result of running over a pedestrian, the impact against the hood may reach the engine rigid elements. To that end, according to the invention, the hood is mounted in such a way that the distance between it and the rigid or non deformable elements of the engine compartment can increase in case of an accident, immediately before the impact on the hood is produced. With this system it is possible to increase the hood deformation distance and eliminate or reduce the possibility of an impact on a rigid element of the hood. When the hood is raised the deformation space increases and thus, there is no impact on the solid or rigid elements immediately under it.

To that end, according to the invention, the connection between the hood and the engine compartment is carried out through active hinges which can keep the hood in a closed position, coupled over the engine compartment, and move it to an upper position, in which it is separated from said compartment. The hinges are activated by a pedestrian detection system which can send a signal to a drive motor, immediately before the impact against the hood occurs.

The hinges which connect the hood over the hood compartment comprise an upper end arm, which is fixed to the vehicle hood, a lower end arm or support, which is fixed to the vehicle structure and an intermediate pivoted arm which is coupled at one end to the upper end arm and at the other end to the lower end arm about parallel axes.

The articulation shaft between the intermediate pivoted arm and the lower end arm is connected to a drive motor, which is activated by a pedestrian detection sensor, immediately before the impact against the hood is about to occur. This shaft goes through the lower end arm having a free turning movement, while it is connected with the intermediate pivoted arm through a rigid transmission coupling, which will prevent the relative turning between said shaft and the intermediate pivoted arm. The articulation shaft between the intermediate pivoted arm and the lower end arm also includes an anti-return mechanism which enables the turning of said shaft in only one way, which coincides with the hood elevation, with respect to its coupling or closing position of the engine compartment.

According to a preferred embodiment, the rigid transmission coupling between the articulation shaft of the intermediate pivoted arm and the lower end arm with said intermediate pivoted arm comprises a cogwheel integral to said articulation shaft and a crown integral to the intermediate pivoted arm which is coupled to said cogwheel. The crown can be cut as an opening in the intermediate pivoted arm itself, being the cogwheel housed inside said crown.

As regards the aforementioned anti-return mechanism, it can consist of a set of gear and ratchet comprising a cogwheel integral to the articulation shaft between the intermediate pivoted arm and the lower end arm, and a pawl which is articulated at one end to a fixed axis and rests at the other end against the teeth of the aforementioned cogwheel, preventing its turning in one direction.

The intermediate pivoted arm can pivot between two limit positions corresponding to the position of coupling or complete closure of the hood, in which the pivoting of said intermediate pivoted arm will be minimum, and a position of maximum elevation of the hood which corresponds to the maximum pivoting of the intermediate pivoted arm. These limit positions will be defined by the stops of the lower end arm, against which the intermediate pivoted arm will hit at the two end positions defined.

### BRIEF DESCRIPTION OF THE DRAWINGS

The attached drawings show a non-limiting example of an embodiment which will help understand better the characteristics and advantages of the invention.

In the drawings:
Figure 1 shows a partial perspective view of an automobile hood in an elevated position as a result of running over a pedestrian.
Figure 2 shows an exploded view of a hinge, formed according to the invention, for the articulation of an automobile hood.
Figure 3 shows a perspective view of the hinge in a folded position which corresponds to the position of maximum coupling or closing of the hood.
Figure 4 shows a similar perspective to figure 3, showing the hinge in an unfolded position, which corresponds to the position of hood elevation.
Figure 5 shows a lateral elevation view of the anti-return mechanism of the hinge.

### DETAILED DESCRIPTION OF AN EMBODIMENT

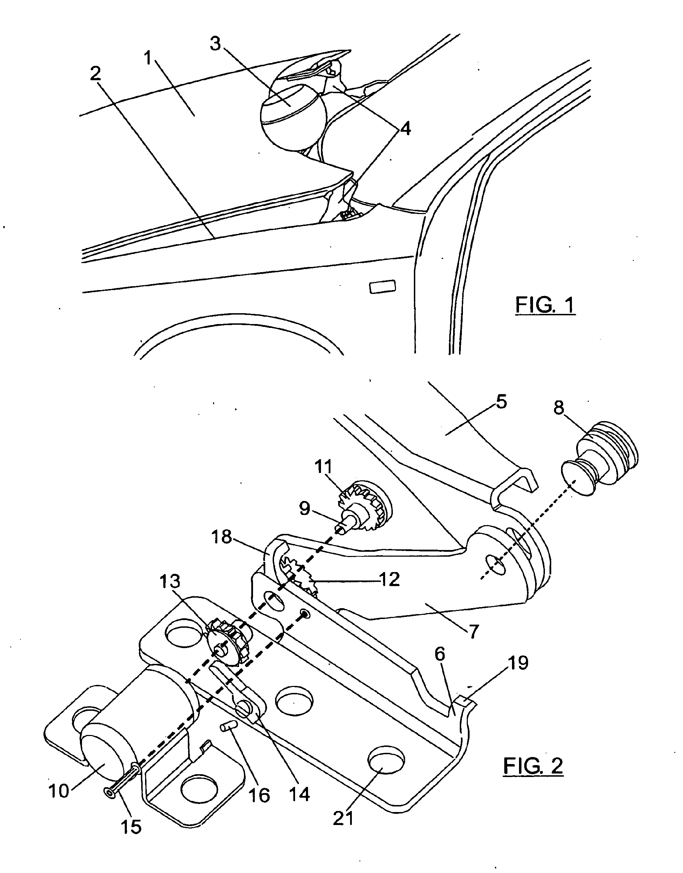

Figure 1 shows a partial perspective view of an automobile hood 1 which is partially elevated or separated from the edge 2 of the engine compartment, as a consequence of running over a pedestrian 3 impacting against said hood.

The elevation of the hood 1 is produced by means of a pedestrian detection system which can send a signal to a mechanism in charge of activating the hinges 4 which articulate the hood 1, immediately before the pedestrian 3 impacts on the hood 1. The activation of the hinges 4 causes the elevation of the hood 1 from its closing position, making it pivot on the closing hook of the latch, located at the front on the hood.

Figure 2 shows an exploded perspective view of one of the hinges 4, comprising an upper end arm which is fixed to the hood 1 of the vehicle, a lower end arm 6, which works as a support for fixing it to the vehicle structure, and an intermediate pivoted arm 7 which is articulated at an end to the upper end arm according to a free turning connector 8, while at the other end it is articulated to the lower end arm about an shaft 9 which is parallel to the connector 8, which is connected to a drive motor 10. This shaft 9 goes through the lower end arm 6 having a free turning movement, while it is connected with the intermediate pivoted arm through a rigid transmission coupling, which in the example shown in the drawings is formed by a cogwheel 11 integral to the shaft 9 and a crown 12 integral to the intermediate pivoted arm 7 and which can be curved as an opening in said arm. The mechanism comprising the cogwheel 11 and the crown 12 prevents the relative turning of the shaft 9 and the intermediate pivoted arm 7.

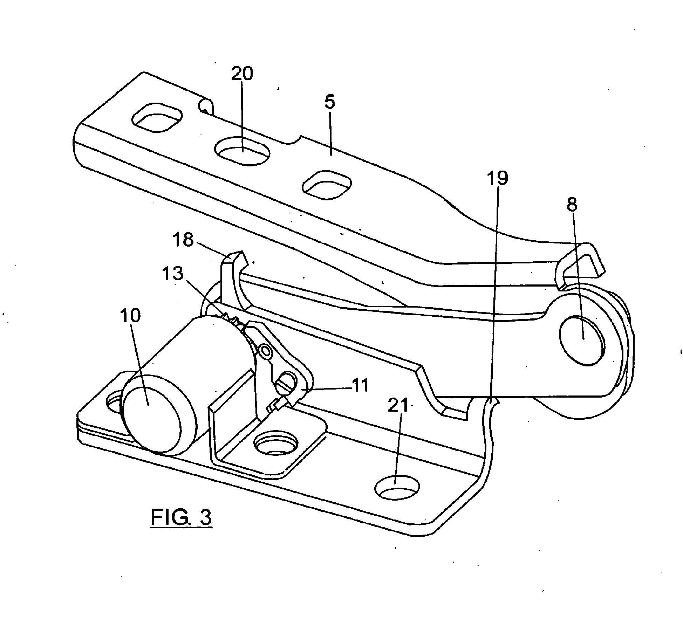

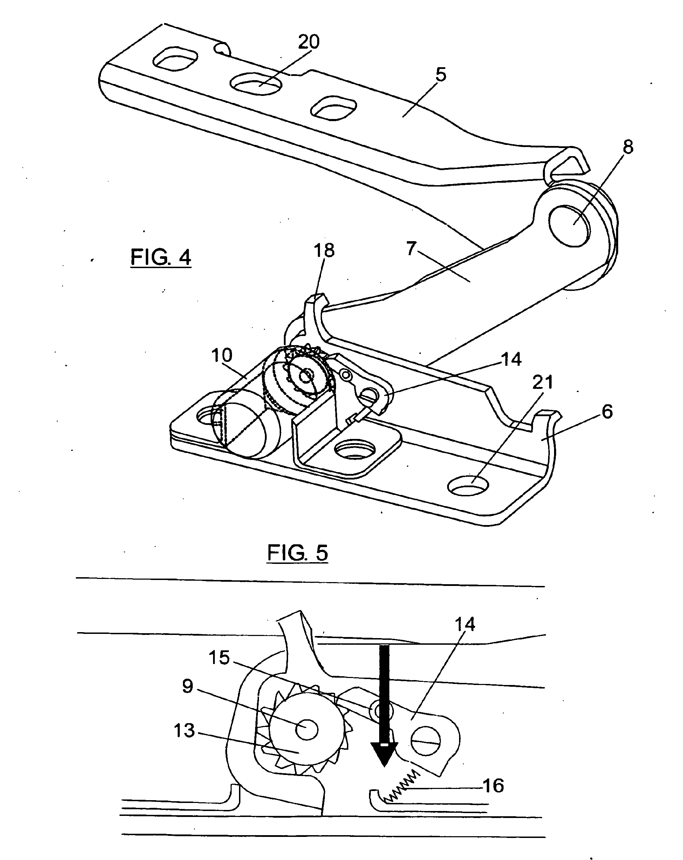

With the arrangement described, when the pedestrian detection system detects the proximity of a pedestrian, it sends an activation signal to the drive motor 10, causing the shaft 9 and the cogwheel 11 to turn, which due to its coupling with the crown 12, makes the arm 7 pivot from a position of minimum pivoting, shown in figure 3, which corresponds to the position of coupling of the hood 1 on the edge 2 of the engine compartment, and a position of maximum pivoting, shown in figure 4, in which the hood 1 is elevated from the edge 2 of the engine compartment, as shown in figure 1, position in which there is an increase of the distance between said hood 1 and the rigid elements in the engine compartment.

In order to avoid the hinge from accidentally returning to the maximum pivoting position 4 to the minimum pivoting position 3, the hinge has an anti-return mechanism which, as it can be seen in figures 2 and 5, can consist of a cogwheel 13, which is integral to the articulation shaft 9 between the intermediate pivoted arm 7 and the lower end arm 6, and a pawl 14 which is articulated at an intermediate point through an axis 15 to a fixed support 16, which can consist of the drive motor 10 support itself. The pawl 14 rests, at one end on the teeth of the cogwheel 13, while at the opposite end it receives the action of a spring 16 which keeps the pawl 14 constantly resting on the teeth of the cogwheel 13.

The limits of maximum and minimum pivoting of the intermediate pivoted arm 7 are defined by stops 18 and 19.

As it can be seen in figure 3, in the minimum pivoting position, the intermediate pivoted arm 7 rests against the stop 19, limiting this position, while in the maximum pivoting position shown in figure 4, the intermediate pivoted arm 7 rests against the stop 18, thus being secured the hinge positions corresponding to the hood total closing position and its maximum elevation position.

The upper end arm 5 and the lower end arm 6 can have means 20 and 21 to fix them to the hood and the vehicle structure, respectively.

With the arrangement described it is possible to raise an automobile hood 1 enough to separate the pedestrian's impact from all the rigid elements under it, which could otherwise cause irreversible serious damages. When the hood 1 rises, its deformation space increases, reducing the risk of an impact against the solid elements immediately under it.

Definitely, the hinge of the invention is comprised of only one arm, comprising the intermediate pivoted arm 7, which is articulated at one end to the hood 1, through any kind of support, which can consist of the upper end arm 5, while at the other end it is connected to the structure of the vehicle by an shaft 9 which can consist of the drive motor 10 axis itself, fixed to the structure of the vehicle, which can also be used for fixing said structure to a support comprising the lower end arm 6 which has the stops 18 and 19.

## Claims

1. Hinge for automobile hoods, comprising an intermediate pivoted arm (7) which is articulated at one end to the hood (1) through a free turning connector (8) and at the opposite end to the vehicle structure, about a shaft (9) whose axis is parallel to the axis of articulation of the connector (8) to the hood; **characterized in that** the shaft (9) is connected to a drive motor (10), mounted on said structure and which can be activated by a pedestrian detection sensor, said drive motor (10) being connected to the intermediate pivoted arm (7) through a rigid transmission coupling, which prevents the relative turning between said shaft (9) and the intermediate pivoted arm (7); wherein said shaft (9) between the intermediate pivoted arm and the vehicle structure includes an anti-return mechanism which enables said shaft (9) to turn in only one direction.

2. Hinge according to claim 1, **characterized in that** the intermediate pivoted arm is connected to the hood (1) through an upper end arm (5) which is articulated to said intermediate pivoted arm (7) through a free turning connector (8).

3. Hinge according to claim 1, **characterized in that** the intermediate pivoted arm (7) is connected to the vehicle structure through a lower end arm or support (6), which, having a free turning movement, goes through the articulation shaft (9) between the intermediate pivoted arm (7) and the vehicle structure.

4. Hinge according to the preceding claims, **characterized in that** the rigid transmission coupling comprises a cogwheel (11), integral to the articulation shaft (9) between the intermediate pivoted arm (7) and the lower end arm (6), and a crown (12), integral to the intermediate pivoted arm and connected to said cogwheel.

5. Hinge according to claim 4, **characterized in that** the crown (12) is cutted as an opening in the intermediate pivoted arm (7) itself and the cogwheel (11) is housed tightly inside said crown.

6. Hinge according to claims 1 to 3, **characterized in that** the aforementioned anti-return mechanism consists of a set of gear and ratchet comprising a cogwheel (13) integral to the articulation shaft (9) between the intermediate pivoted arm (7) and the lower end arm (6), and a pawl (14) which is articulated at an intermediate point to a fixed support, resting at one end against the teeth of the cogwheel (13) and receiving at the opposite end the action of a spring (16) which pushes the pawl (14) towards the teeth of said cogwheel.

7. Hinge according to claim 3, **characterized in that** the lower end arm (6) has stops (18 and 19) which limit the pivoting of the intermediate pivoted arm (7) between a maximum pivoting position, in which the hood (1) is coupled to the edge of the engine compartment, and a maximum pivoting position, in which the hood is elevated from the edge of the engine compartment.

## Patentansprüche

1. Scharnier für Automobilhauben, welches umfasst: einen Zwischenschwenkarm (7), welcher an einem Ende an der Haube (1) über ein frei drehendes Verbindungsstück (8) und am entgegengesetzten Ende an der Fahrzeugstruktur um eine Welle (9) herum, deren Achse parallel zu der Gelenkachse des Verbindungsstückes (8) zu der Haube ist, angelenkt ist; **dadurch gekennzeichnet, dass** die Welle (9) mit einem Antriebsmotor (10) verbunden ist, der an der Struktur angebracht ist und welcher durch einen Fußgänger-Detektionssensor aktiviert werden kann, wobei der Antriebsmotor (10) mit dem Zwischenschwenkarm (7) über eine starre Übertragungskupplung verbunden ist, welche die relative Drehung zwischen der Welle (9) und dem Zwischenschwenkarm (7) verhindert; wobei die Welle (9) zwischen dem Zwischenschwenkarm und der Fahrzeugstruktur einen Rücklaufsperrmechanismus aufweist, welcher der Welle (9) nur in einer Richtung ermöglicht, sich zu drehen.

2. Scharnier nach Anspruch 1, **dadurch gekennzeichnet, dass** der Zwischenschwenkarm mit der Haube (1) über einen oberen Endarm (5) verbunden ist, welcher an den Zwischenschwenkarm (7) über ein frei drehendes Verbindungsstück (8) angelenkt ist.

3. Scharnier nach Anspruch 1, **dadurch gekennzeichnet, dass** der Zwischenschwenkarm (7) mit der Fahrzeugstruktur über einen unteren Endarm oder eine Stütze (6) verbunden ist, welche eine freie Drehbewegung ausführen kann und zwischen dem Zwischenschwenkarm (7) und der Fahrzeugstruktur durch die Gelenkwelle (9) hindurch verläuft.

4. Scharnier nach einem der vorhergehenden Ansprüche, **dadurch gekennzeichnet, dass** die starre Übertragungskupplung ein Zahnrad (11), das mit der Gelenkwelle (9) zwischen dem Zwischenschwenkarm (7) und dem unteren Endarm (6) einstückig ausgebildet ist, und einen Innezahnkranz (12), der mit dem Zwischenschwenkarm einstückig ausgebildet und mit dem Zahnrad verbunden ist, umfasst.

5. Scharnier nach Anspruch 4, **dadurch gekennzeichnet, dass** der Innenzahnkranz (12) als eine Öffnung in dem Zwischenschwenkarm (7) selbst ausgeschnitten ist und das Zahnrad (11) fest innerhalb dieses Innenzahnkranzes aufgenommen ist.

6. Scharnier nach Anspruch 1 bis 3, **dadurch gekennzeichnet, dass** der oben erwähnte Rücklaufsperrmechanismus aus einem Satz aus Zahnrad und Ratsche besteht, der ein Zahnrad (13) umfasst, das mit der Gelenkwelle (9) zwischen dem Zwischenschwenkarm (7) und dem unteren Endarm (6) einstückig ausgebildet ist, und eine Sperrklinke (14), welche in einem Zwischenpunkt an eine feste Stütze angelenkt ist, wobei sie an einem Ende an den Zähnen des Zahnrades (13) ruht und am entgegengesetzten Ende von einer Feder (16) beaufschlagt wird, welche die Sperrklinke (14) in Richtung der Zähne des Zahnrades drückt.

7. Scharnier nach Anspruch 3, **dadurch gekennzeichnet, dass** der untere Endarm (6) Anschläge (18 und 19) aufweist, welche die Schwenkung des Zwischenschwenkarms (7) zwischen einer maximalen Schwenkposition, in welcher die Haube (1) mit dem Rand des Motorraums verbunden ist, und einer maximalen Schwenkposition, in welcher die Haube von dem Rand des Motorraums abgehoben ist, begrenzen.

## Revendications

1. Une charnière de capot automobile, comprenant un bras pivotant intermédiaire (7) qui est articulé au niveau d'une extrémité au capot (1) à travers un connecteur à rotation libre (8) et au niveau de l'extrémité opposée, à la structure du véhicule, autour d'une tige (9) dont l'axe est parallèle à l'axe d'articulation du connecteur (8) au capot ; **caractérisée en ce que** la tige (9) est raccordée à un moteur d'entraînement (10), monté sur cette structure et qui peut être activé par un capteur de détection de piéton, ce moteur d'entraînement (10) étant raccordé au bras pivotant intermédiaire (7) à travers un couple de transmission rigide, qui empêche la rotation relative entre cette tige (9) et le bras pivotant intermédiaire (7) ; où cette tige (9) entre le bras pivotant intermédiaire et la structure du véhicule comprend un mécanisme anti-retour qui permet à cette tige (9) de ne tourner que dans un seul sens.

2. Charnière selon la revendication 1, **caractérisée en ce que** le bras pivotant intermédiaire est raccordé au capot (1) par un bras supérieur (5) qui est articulé à ce bras pivotant intermédiaire (7) à travers un connecteur à libre rotation (8).

3. Charnière selon la revendication 1, **caractérisée en ce que** le bras pivotant intermédiaire (7) est raccordé à la structure du véhicule par un bras inférieur ou support (6), lequel, grâce à son mouvement de rotation libre, passe à travers la tige d'articulation (9) entre le bras pivotant intermédiaire (7) et la structure du véhicule.

4. Charnière selon les revendications précédentes, **caractérisée en ce que** le couple de transmission rigide comprend une roue dentée (11), intégrée à la tige d'articulation (9) entre le bras pivotant intermédiaire (7) et le bras inférieur (6), et une couronne (12), intégrée au bras pivotant intermédiaire et raccordée à cette roue dentée.

5. Charnière selon la revendication 4, **caractérisée en ce que** la couronne (12) est découpée telle une ouverture dans le propre bras pivotant intermédiaire (7) et la roue dentée (11) est étroitement logée à l'intérieur de cette couronne.

6. Charnière selon les revendications 1 à 3, **caractérisée en ce que** le mécanisme anti-retour susmentionné consiste en un jeu d'engrenage et de cliquet comprenant une roue dentée (13) intégrée à la tige d'articulation (9) entre le bras pivotant intermédiaire (7) et le bras inférieur (6), et un cliquet (14) qui est articulé au niveau d'un point intermédiaire à un support fixe, s'appuyant à une extrémité sur la dent de la roue dentée (13) et recevant à l'autre extrémité l'action d'un ressort (16) qui pousse le cliquet (14) vers la dent de cette roue dentée.

7. Charnière selon la revendication 3, **caractérisée en ce que** le bras inférieur (6) a des butées (18) et (19) qui limitent le pivotement du bras de pivotement intermédiaire (7) entre une position de pivotement maximum, dans laquelle le capot (1) est assemblé au bord du compartiment moteur, et une position de pivotement maximum, dans laquelle le capot est levé du bord du compartiment moteur.
